# EUROPEAN PATENT APPLICATION

(11) **EP 1 079 618 A2**
(43) Date of publication of application: **28.02.2001**
(21) Application number: 00307023.2
(22) Date of filing: 16.08.2000
(51) Int. Cl.: H04N 5/445

(54) **Audio messages**

(30) Priority: 27.08.1999 GB 9920214
(71) Applicant: Pace Micro Technology PLC, Saltaire, Shipley, BD14 3LF (GB)
(72) Inventor: Newell, Jason, Cottingley, West Yorkshire (GB)
(74) Representative: Wood, Graham

(57) **Abstract**

The invention relates to a broadcast data receiver which is used to receive data transmitted via a broadcaster from a remote location, process the same and generate video, audio and auxiliary functions as part of a television system. The receiver in accordance with the invention allows for the generation of audio messages upon reception of a signal which may be included within the received data and/or a signal received from the user of the receiver via a control device and/or from a device connected to said receiver.

## Description

The invention to which this application relates is apparatus which is capable of receiving broadcast data for the decoding and processing of said data for the generation of an on-screen display such as a television programme, and/or audio signal such as radio station transmissions.

It is increasingly common for premises to utilise broadcast data receivers for receiving transmitted digital data, which data can be transmitted from a remote location via satellite, cable or terrestrial systems to the receiver. The receiver is provided with a means for decoding and processing the received data to allow the user of the device the option to view a plurality of television programmes, listen to radio channels and/or other information at any one instant. The receiver is typically connected to a television and/or other means including a display screen and typically speakers. Normally, whichever option is chosen by the user the screen is utilised to a varying extent so that if a radio channel is selected, the screen will indicate the particular radio station which has been selected, whereas if a television programme is selected the visual content and movement is obviously an important part of the programme. If teletext and/or electronic programme guides can be selected, details relating to news, travel, weather and/or programmes to be viewed, are displayed on screen. It will therefore be appreciated that at the present time, the receiver, although it is connected to speakers for purposes of audio sound to accompany television programmes and/or the transmission of radio channels, is mainly a visual device in that it utilises the screen display to display information relating to programmes to be selected and/or instructions relating to the utilisation of the receiver.

The visual implementation of installation instructions and/or other information is problematic to persons who have sight impairment and may also not always be appropriate when persons who may wish to see this information are not themselves in a position in which they can view the screen clearly.

The aim of the present invention is to provide a means whereby information can be provided to the user of a receiver in a manner, either in conjunction with an on-screen display, or independently, in which the presentation of the information is of advantage to the user.

In a first aspect of the invention, there is provided a broadcast data receiver apparatus for receiving and processing digital data transmitted from a remote location and for generating video and/or audio from said digital data via a screen and/or speakers and characterised in that said receiver includes a means for generating an audio message in response to a signal included within the received data and/or a signal received from the user of the receiver via a control device and/or from a device connected to said receiver.

In one embodiment, the means in the receiver for generating the audio message includes a memory in which a number of pre-recorded messages are held and a control system for selecting one, or a number, of the pre-selected messages in response to a particular control signal received.

In one embodiment, messages may be recorded by the user using a record function on the receiver and in this case the user's message is held in the memory means in the receiver and can subsequently be selected to be displayed upon a particular occurrence and said occurrence can also be selected by the user.

It is envisaged that the message will be heard by the user via speakers which are normally connected to the receiver for use in the generation of the radio channel signals or the audio content of television programmes and the volume of the messages can be controlled and selected by the user.

In one embodiment, the messages relate to the installation procedure to be followed when installing the receiver and/or connecting the same to other electrical apparatus so that the user can follow the voice messages when installing the apparatus. There may also be provided a facility to re-play a message or part of a message if the user has not followed the same.

In a further feature, the voice messages may be in response to user selected criteria and, upon the occurrence of a criteria, a particular message is played. Yet further, a message may be played upon the occurrence of an action in an article or apparatus connected to the receiver upon which occurrence, a message is played to a user to highlight this to them.

In a yet further embodiment, the user may receive a message which is transmitted from a data broadcaster to the receiver and, once the receiver has processed the data, the message is played to the user and this may be as a result of a user-defined action such as a subject search, information search or the like.

It should also be appreciated that a further aspect of the invention is that results of the search which have been specified by the user may also be provided in a video form as well as an audio form and/or in combination.

In a further aspect of the invention there is provided a broadcast data receiver for a television system, said receiver receiving audio, video and/or auxiliary data from a broadcaster and processing the same for display on a display screen and/or audio sound via speakers of the system and, characterised in that means are provided in the receiver to generate an audio message or signal in response to an activation signal received by the receiver from the broadcaster, a component of the television system and/or other electrical apparatus connected thereto.

Specific embodiments of the invention will now be described.

In one embodiment, the user may request a service which is provided to undertake a particular search, say for example, for holiday availability at specified prices and, if the receiver is connected to the service provider via a telecommunications link or other communication link, the user is able to define the search via a control device which could for example be a remote control device, and then send the search request to the service provider. When or if the service provider performs a search, they can broadcast the message using audio data whereupon the message is received at the receiver and then played to the user to indicate the results of the search.

In another use of the invention, the user is able to record their own messages and save the said messages in the receiver memory. The subsequent playing of these messages can then be controlled by the receiver in conjunction with user defined parameters. For example, in one use, if the receiver receives an indication of an incoming telephone call, the receiver may set to a message service and may generate the recorded message upon the receipt of the incoming telephone call to the caller. In another use, a user may wish to leave a message for another person visiting the premises when the user is out of the premises and therefore can record an audio message to be subsequently played at a specified time for example.

In another potential use, if a person is sight impaired or has difficulty reading instructions on the screen, the various options available to utilise the receiver services and/or the display screen services, can be relayed to the user in audio form rather than an on-screen display thereby improving the ability of the user to navigate the various options and selections which are available.

In a yet further feature of the invention, the receiver can be provided as part of a home network system whereby occurrences to other apparatus or articles and which are connected via communication network to the receiver, can be indicated to a user via audio messages. For example, if the front gate of a premises is provided with a sensing means and which sensing means is connected to the receiver via a communication system, a change in condition of the sensor can be indicated. Thus, if the user is out of the premises and the front gate is opened hence causing a change in condition, that change in condition is relayed to the receiver. Upon receiving this change in condition signal, the receiver controls the memory and selects, in response, a message which is then played to the user and/or displayed on screen to indicate that the front gate has been opened in their absence upon the user's return. This form of message service can be provided in response to any type of device connected to the receiver via a home network system and any number of messages can be recorded and generated as required.

## Claims

1. Broadcast data receiver apparatus for receiving and processing digital data transmitted from a remote location and for generating video and/or audio from said digital data via a screen and/or speakers and characterised in that said receiver includes a means for generating an audio message in response to a signal included within the received data and/or a signal received from the user of the receiver via a control device and/or from a device connected to said receiver.

2. A broadcast data receiver according to claim 1 characterised in that the means in the receiver for generating the audio message includes a memory in which a number of pre-recorded audio messages are held and a control system for selecting one, or a number, of the pre-selected messages in response to a particular control signal received.

3. A broadcast data receiver according to claim 2 characterised in that the audio messages are generated and recorded by the user using a record function on the receiver.

4. A broadcast data receiver according to claim 1 characterised in that the audio message is relayed to the use via speakers connected to the receiver.

5. A broadcast data receiver according to claim 1 characterised in that the audio messages relate to the installation procedure to be followed by the user when installing the receiver and/or connecting the same to other electrical apparatus so that the user can follow the voice messages when installing the apparatus.

6. A broadcast data receiver according to claim 1 characterised in that the receiver allows the user selection to re-play an audio message or part of the message.

7. A broadcast data receiver according to claim 1 characterised in that the audio message is generated from data received which has been transmitted from the remote location.

8. A broadcast data receiver for a television system, said receiver receiving audio, video and/or auxiliary data from a broadcaster and processing the same for display on a display screen and/or audio sound via speakers of the system and, characterised in that means are provided in the receiver to generate an audio message or signal in response to an activation signal received by the receiver from the broadcaster, a component of the television system and/or other electrical apparatus connected thereto.
